# EUROPÄISCHE PATENTSCHRIFT

(11) **EP 3 732 003 B1**
(45) Veröffentlichungstag und Bekanntmachung des Hinweises auf die Patenterteilung: **10.11.2021**
(21) Anmeldenummer: 20706686.1
(22) Anmeldetag: 19.02.2020
(51) Int. Cl.: B25J 15/02, B25J 9/10, F16C 21/00, F16C 29/00, F16C 29/04

(54) **GREIF- ODER SPANNVORRICHTUNG MIT GLEITFÜHRUNG UND WÄLZFÜHRUNG ZWISCHEN BACKENFÜHRUNGSFLÄCHEN UND GEHÄUSE**
GRIPPING OR CLAMPING FIXTURE WITH SLIDING GUIDE AND ROLLER GUIDE BETWEEN JAW GUIDING FACES AND HOUSING
DISPOSITIF DE PRÉHENSION OU DE SERRAGE COMPRENANT UN GUIDE À GLISSEMENT ET UN GUIDE À ROULEMENT ENTRE DES SURFACES DE GUIDAGE DE MÂCHOIRE ET UN BOÎTIER

(30) Priorität: 21.02.2019 DE 102019104484
(43) Veröffentlichungstag der Anmeldung: 04.11.2020
(73) Patentinhaber: Schunk GmbH & Co. KG Spann- und Greiftechnik, 74348 Lauffen am Neckar (DE)
(72) Erfinder: FRANZ, Michael, 74360 Ilsfeld (DE); BONNET, Klaus, 74226 Nordheim (DE); SCHLEUSENER, Tobias, 75031 Eppingen (DE); HEINZL, Julian, 74336 Brackenheim (DE); KIRSTEN, Benjamin, 74336 Brackenheim (DE); FELLHAUER, Bruno, 74336 Brackenheim (DE); WINKLER, Ralf, 74226 Nordheim (DE)
(74) Vertreter: DREISS Patentanwälte PartG mbB
(86) Internationale Anmeldenummer: PCT/EP2020/054373
(87) Internationale Veröffentlichungsnummer: WO 2020/169675

(56) Entgegenhaltungen:
- DE-A1- 4 327 543
- DE-A1-102017 102 652
- US-A- 4 707 013
- Peter Groche ET AL: "Wälz-oder Gleitlager? Innovation durch Kombination: Wälz-GleitLagerung für Servopressen", MM Maschinenmarkt, 7. Oktober 2016 (2016-10-07), XP055698231, Gefunden im Internet: URL:https://www.maschinenmarkt.vogel.de/in novation-durch-kombination-waelz-gleit-lag erung-fuer-servopressen-a-552862/ [gefunden am 2020-05-26]
- Michael Kier ET AL: "Neuartige Lagerungstechnik des Kurbeltriebs von Verbrennungsmotoren zur Verbesserung der Effizienz und Minderung der Emissionen", , 1. Juni 2011 (2011-06-01), XP055698240, Gefunden im Internet: URL:https://www.dbu.de/OPAC/ab/DBU-Abschlu ssbericht-AZ-25518_01.pdf [gefunden am 2020-05-26]

## Beschreibung

Die Erfindung betrifft eine Greif- oder Spannvorrichtung, mit einem Gehäusekörper und mit einer im Gehäusekörper vorgesehenen Backenführung, die zwei Seitenwandungen aufweist, mit wenigstens einer in der Backenführung entlang einer Verfahrrichtung verfahrbaren Backe, wobei an den Seitenwandungen Führungsflächen vorgesehen sind und wobei die Backe zur Bildung einer Gleitführung mit den Führungsflächen zusammenwirkende Gleitflächen aufweist.

Derartige Greif- und Spannvorrichtungen sind beispielsweise aus der DE 2017 102 652 A1 oder der DE 10 2015 205 657 A1 bekannt.

Die Dokumente "Wälz-oder Gleitlager? Innovation durch Kombination: Wälz-GleitLagerung für Servopressen" (Peter Groche ET AL, MM Maschinenmarkt, 7. Oktober 2016) und DE4327543A1 gehören ebenfalls zum Stand der Technik.

Bei solchen Greif- oder Spannvorrichtungen ist es erforderlich, die Backen hochpräzise in den Backenführungen zu führen. Zudem muss eine vergleichsweise leichtgängige Führung der Backen in den Backenführungen bereitgestellt werden. Um dies zu erreichen, werden die Backen bzw. deren Gleitflächen, sowie die Führungsflächen der Backenführung eingeschliffen. Ein derartiges Einschleifen ist vergleichsweise aufwändig und teuer.

Das Vorsehen einer Gleitführung zwischen den Backen und dem Gehäusekörper hat den Nachteil, dass ein sogenannter Stick-Slip-Effekt bzw. Haftgleiteffekt auftritt. Der Stick-Slip-Effekt führt zu einem Ruckgleiten von gegeneinander bewegten Körpern. Dieser Effekt tritt insbesondere dann auf, wenn die Hafttreibung merklich größer ist als die Gleitreibung. Um die Backe in Bewegung zu setzen, ist folglich eine höhere Kraft erforderlich, als sie zur Aufrechterhaltung der Gleitbewegung erforderlich ist.

Aus dem Stand der Technik sind zur möglichst leichtgängigen Führung von bewegten Bauteilen zwar Wälzführungen bekannt, welche Wälzkörper, wie beispielsweise Kugeln, Rollen oder Nadeln, vorsehen, die zwischen den bewegten Teilen abwälzen. So zeigen die US 4 707 013 A, die DE 39 21 055 A1 und die DE 20 2011 106 379 U1 Greif- und Spannvorrichtungen mit Wälzführungen zwischen der Backe und den Seitenwandungen.

Der Vorteil von Wälzführungen ist, dass sie keinen Stick-Slip-Effekt, wie er bei Gleitführungen auftritt, aufweisen. Wälzführungen sind für Greif- oder Spannvorrichtungen allerdings deshalb ungeeignet, weil sie vergleichsweise schlag- und stoßempfindlich sind. Erhält beispielsweise die mit einer Wälzführung geführte Backe einer Greif- oder Spannvorrichtung einen Stoß oder Schlag, so wird die auf die Backe wirkende Kraft auf den Wälzkörper übertragen. Dies kann vergleichsweise schnell zu Beschädigungen an der Wälzfläche des Wälzkörpers oder an dessen Gegenfläche führen, wodurch eine exakte Führung der Backe dann nicht mehr gewährleistete ist. Insofern eignen sich Wälzführungen für Greif- oder Spannvorrichtungen, die Schlägen oder Stößen ausgesetzt sind, grundsätzlich nicht.

Der vorliegenden Erfindung liegt nunmehr die Aufgabe zugrunde, eine eingangs genannte Greif- oder Spannvorrichtung bereitzustellen, welche eine Gleitführung zur Führung der Backen aufweist, wobei der bei Gleitführungen bekannte Stick-Slip-Effekt möglichst gering sein soll und insbesondere vermieden wird.

Diese Aufgabe wird gelöst durch eine Greif- oder Spannvorrichtung mit den Merkmalen des Patentanspruchs 1. Eine solche Greif- oder Spannvorrichtung sieht insbesondere vor, dass in der Backenführung wenigstens ein Laufbahnteil und Wälzkörper vorgesehen sind, wobei die Backe und das Laufbahnteil jeweils eine Laufbahn zur Anlage gegen die Wälzkörper zur Bildung einer Wälzführung aufweisen. Ferner sind Vorspannmittel zur Erzeugung einer Vorspannkraft vorgesehen, wobei die Vorspannkraft auf das Laufbahnteil wirkt, so dass die Wälzkörper gegen die backenseitigen Laufbahnen gedrängt werden. Das Laufbahnteil erstreckt sich dabei vorzugsweise in Verfahrrichtung und ist seitlich neben der Backe, also zwischen der Backe und den Seitenwandungen, vorgesehen.

Eine derartige Ausbildung hat den Vorteil, dass neben der Gleitführung eine Wälzführung vorgesehen ist, deren Wälzkörper mittels den Vorspannmitteln, also spielfrei, zwischen dem Gehäusekörper und der Backe vorgesehen sind. Dadurch kann beim Anfahren bzw. Bewegen der Backe ein Stick-Slip-Effekt reduziert oder vermieden werden, weshalb eine derartige Greif- oder Spannvorrichtung vergleichsweise leichtgängig betätigt werden kann. Treten Überlastungen, Schläge oder Stöße auf, so können diese über die Gleitführung in den Gehäusekörper abgeleitet werden, ohne dass es zu Beschädigungen an den Wälzkörpern kommt.

Durch Vorsehen der Vorspannmittel kann die Wälzführung im Ergebnis spielfrei ausgebildet werden und muss nicht aufwendig eingeschliffen oder gepaart werden, wodurch sich der Fertigung-und Montageaufwand reduziert.

Vorteilhafterweise ist die Gleitführung als spielbehaftete Gleitführung ausgebildet. Die Gleitführung weist dann zwischen den Führungsflächen und den Gleitflächen ein Spiel auf, sodass die Führungsflächen nur dann gegen die Gleitflächen wirken, wenn eine entgegen der Richtung der Vorspannkraft, die Vorspannkraft aufhebende oder überschreitende Kraft auf die Backe wirkt. Wird folglich die Vorspannkraft, mittels derer die Wälzkörper gegen die backenseitigen Laufbahnen wirken, aufgrund einer aus beispielsweise aus einer Überlastung, einem Schlag oder einem Stoß resultierenden Kraft aufgehoben, so kommt die Gleitführung zum Tragen; in der Greif- oder Spannvorrichtung auftretende Kräfte können über die Gleitführung ohne Beschädigung der Wälzkörper in den Gehäusekörper abgeleitet werden.

Eine derartige Spann- oder Greifvorrichtung weist folglich einen Umschaltpunkt auf, in dem, insbesondere abhängig von der Vorspannkraft und dem Gleitführungsspiel die Rollenführung entlastet wird und die Gleitführung zum Tragen kommt. Der Umschaltpunkt kann dabei so gewählt sein, dass dieser erst im Überlastfall eintritt, um die Wälzführung vor Überlast, Schlägen oder Stößen zu schützen. Somit entsteht eine Wälzführung mit besseren Eigenschaften, die im Überlastfall durch eine Gleitführung geschützt wird. Da in diesem Fall das resultierende Führungsspiel das Spiel der Wälzführung ist, kann die Gleitführungen mit vergleichsweise viel Spiel, und damit kostengünstig hergestellt werden. Das größere Spiel der Gleitführungen kommt dann erst nach dem Umschaltpunkt, in dem von der Wälzführung auf die Gleitführungen umgeschaltet wird, zum Tragen und tritt dann nur bei Überlast auf.

Allerdings ist auch denkbar, dass die Vorspannkraft, und damit der Umschaltpunkt so gewählt wird, dass bei nur geringer Belastung der Greif- oder Spannvorrichtung die Wälzführung zum Tragen kommt und dass dann, wenn die Greif- oder Spannvorrichtung im Nennbetrieb betrieben wird, die Gleitführung zum Tragen kommt. Dabei wird für das Anfahren und reine Bewegen der Backen aufgrund der Wälzführung nur eine geringe Antriebskraft benötigt. Bei einem Verfahren unter Last bzw. im Greifzustand wird ein Großteil der auf die Greifvorrichtung wirkende Kraft über die robustere und belastbarere Gleitführung abgeführt.

Um insbesondere quer zur Verfahrrichtung wirkende Kräfte aufnehmen und sicher abführen zu können, ist vorteilhaft, wenn zwei Laufbahnteile vorgesehen sind, wobei jeweils ein Laufbahnteil zwischen der Backe und der einen Seitenwandung und das andere Laufbahnteil zwischen der Backe und der anderen Seitenwandung vorgesehen ist. Die Laufbahnteile sind vorzugsweise symmetrisch zueinander und/oder zu einer sich in Verfahrrichtung erstreckenden Mittelebene angeordnet. Die Mittelebene erstreckt sich in Verfahrrichtung und liegt mittig zwischen den Seitenwandungen.

Die Laufbahnteile können dabei vorzugsweise parallel zueinander verlaufende Laufbahnen aufweisen. Hierdurch können Kräfte symmetrisch in den Gehäusekörper abgleitet werden.

Ferner ist vorteilhaft, wenn das jeweilige Laufbahnteil zwei einen Winkel einschließende Laufbahnen aufweist und wenn die jeweilige Backe dazu entsprechend verlaufende Gleitflächen aufweist. Die Laufbahnen können dabei insbesondere einen Winkel zwischen 60° und 120°, und vorzugsweise im Bereich von 90° einschließen. Andererseits ist auch denkbar, dass die Laufbahnen einen Winkel zwischen 300° und 240° und insbesondere im Bereich von 270° einschließen. Die Wälzkörper können vorzugsweise in einem Wälzkörperkäfig gefangen sein, wobei der Wälzkörperkäfig so ausgebildet ist, dass er die Wälzkörper entsprechend dem Winkel, den die Laufbahnen einschließen, hält. Durch vorsehen eines solchen Winkels können auf die Greifstrich oder Spannvorrichtung wirkende Kräfte sicher umgelenkt und abgeleitet werden.

Um eine sichere Führung der Backe in der Backenführung vorzusehen, ist vorteilhaft, wenn die Seitenwandungen der Backenführung jeweils mehrere Führungsflächen aufweisen, wobei die Ebenen, in denen benachbarte Führungsflächen liegen, einen spitzen Winkel einschließen. Dadurch können insbesondere Kräfte, die entlang der Mittelebene, aber nicht in Verfahrrichtung auf die Backe wirken, günstig in den Gehäusekörper abgeleitet werden.

Eine weitere vorteilhafte Ausführungsform ergibt sich dann, wenn die Backe wenigstens zwei mit einer Seitenwandung zusammenwirkende Gleitflächen aufweist und wenn wenigstens eine backenseitige Laufbahn zwischen diesen beiden Gleitflächen angeordnet ist. Hierdurch kann insbesondere die Laufbahn und die mit der Laufbahn zusammenwirkenden Wälzkörper vor Beschädigungen geschützt werden, da die Laufbahn zwischen den Gleitflächen der Gleitführung liegt.

Die Vorspannmittel können vorzugsweise einstückig mit dem Laufbahnteil oder dem Gehäusekörper ausgebildet sein. Die Vorspannmittel können dabei insbesondere durch Materialausnehmungen am Laufbandteil und/oder am Gehäusekörper realisiert sein. Die Materialausnehmungen sind dabei derart angeordnet, dass das Laufbahnteil oder der Gehäusekörper elastisch nachgiebig die Vorspannkraft bereitstellt.

Gemäß der Erfindung ist es allerdings auch denkbar, dass die Vorspannmittel als zwischen dem Gehäusekörper und dem Laufbahnteil vorgesehene Federelemente ausgebildet sind. Derartige Vorspannmittel sind dann separat vom Laufbahnteil und vom Gehäusekörper vorgesehen. Sie können insbesondere als Spiralfedern, Blattfedern, Tellerfedern oder Elastomerfedern ausgebildet sein.

Ferner hat sich als vorteilhaft erwiesen, Einstellmittel zur Einstellung der Vorspannkraft der Vorspannmittel vorzusehen. Insbesondere dann, wenn die Vorspannmittel als Federelemente mit insbesondere einer linearen oder progressiven Fehlerkennlinie ausgebildet sind, ist es denkbar, die Vorspannkraft durch unterschiedlich weites Zusammendrücken des Federelements entsprechend einzustellen. Als Einstellmittel kommen beispielsweise Schrauben oder Bolzen in Betracht, die gegen das jeweilige Vorspannmittel wirken, so dass die Vorspannkraft des Vorspannmittels bzw. die Federkraft des Federmittels eingestellt wird. Dadurch kann die Lage des Umschaltpunkts verändert und an den jeweiligen Anwendungsfall angepasst werden.

Denkbar wäre auch eine weitere Ausführungsform mit zwei Gleitführungen. Die erste Führung wäre dann eine Führung mit vergleichsweise viel Spiel und mit hoher Belastbarkeit und mit einer Paarung wie beispielsweise Stahl-Stahl oder Stahl-Aluminium oder Aluminium-Aluminium. Die zweite Führung wäre beispielsweise eine Führung mit vergleichsweise wenig Spiel, bzw. eine spielfreie Führung, wobei die zweite Führung eine geringere Belastbarkeit aber besseren Gleiteigenschaften als die erste Führung aufweist. Die zweite Führung kann beispielsweise eine Paarung Stahl-Kunststoff oder Aluminium-Kunststoff oder Stahl-Bronze aufweisen.

Ferner ist vorteilhaft, wenn die Wälzkörper in einem Käfig gefangen sind, wobei der Käfig zwischen der Führungsfläche und der Gleitfläche vorgesehen ist. Dabei ist es insbesondere vorteilhaft, wenn der Käfig mit den backenseitigen und laufbahnteilseitigen Laufbahnen zusammenwirkende Gleitabschnitte aufweist. Die Gleitführung kann dann von den Laufbahnen sowie den dazwischen liegenden Gleitabschnitten des Käfigs gebildet werden. Die Laufbahnen wirken folglich mittelbar, unter Zwischenschaltung des Käfigs gegen einander.

Als Wälzkörper kommen insbesondere Kugeln, Tonne, Rollen oder Nadeln in Betracht. Ferner hat sich als besonders vorteilhaft die Verwendung von hohl ausgebildeten Rollen herausgestellt, da diese elastisch und nachgiebig ausgebildet werden können, so dass eine dauerhafte Verformung der Wälzkörper bei auftretenden Stößen oder Schlägen vermieden werden kann. Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1: eine isometrische Ansicht einer erfindungsgemäßen Greifvorrichtung;
- Figur 2: einen Querschnitt durch die Greifvorrichtung gemäß Figur 1;
- Figur 3: einen Querschnitt durch eine weitere erfindungsgemäße Greifvorrichtung;
- Figur 4: einen Ausschnitt aus der Vorrichtung gemäß Figur 3 mit einem Einstellmittel;
- Figur 5: einen Teilquerschnitt durch eine weitere erfindungsgemäße Greifvorrichtung;
- Figur 6: eine isometrische Ansicht eines Ausschnitts aus Figur 5 ohne Backe und ohne Laufbahnteil;
- Figur 7: die Ansicht gemäß Figur 6 mit Laufbahnteil;
- Figur 8: eine der Figur 6 entsprechende Ansicht mit einem anders ausgebildeten Vorspannmittel;
- Figur 9: die Ansicht gemäß Figur 8 mit Laufbahnteil, Wälzkörpern und Backe;

- Figur 10: einen Längsschnitt durch die Ausführungsform gemäß Figur 9 entlang der Ebene X-X;
- Figur 11: Querschnitte durch weitere erfindungsgemäße Greifvorrichtung;
- Figur 12: einen Querschnitt durch eine weitere erfindungsgemäße Greifvorrichtung;
- Figur 13: einen Schnitt entlang der Linie XIII in Figur 12;
- Figur 14: ein Kraft-Weg-Diagramm einer Backe einer erfindungsgemäßen Greifvorrichtung.

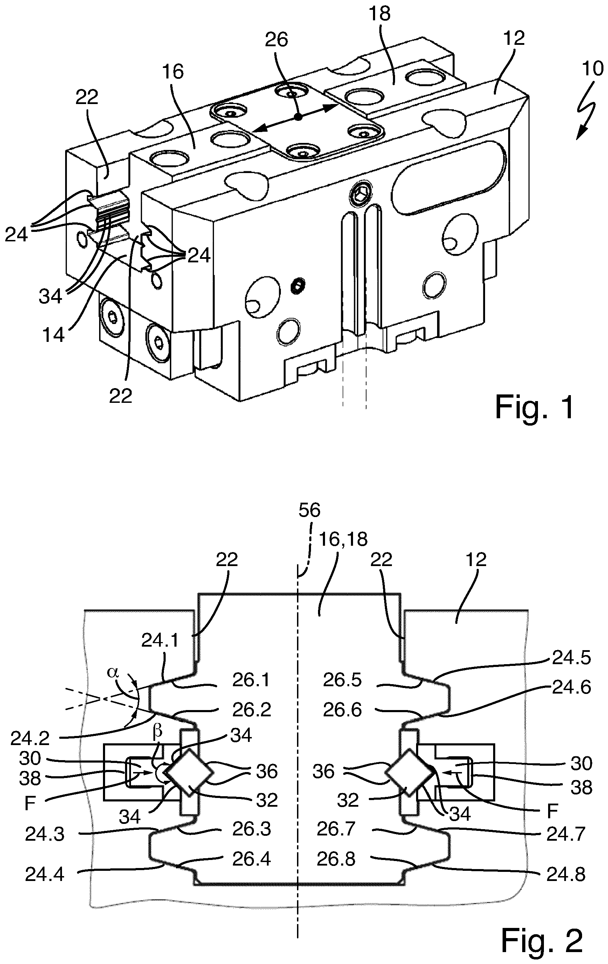

Die in der Figur 1 gezeigte Greifvorrichtung 10 umfasst einen Gehäusekörper 12 mit einer sich in Längsrichtung durch den Gehäusekörper 12 erstreckenden Backenführung 14. In der Backenführung 14 sind zwei verschieblich gelagerte, entlang der Verfahrrichtung 26, die durch einen Doppelpfeil angedeutet ist, aufeinander zu und voneinander weg bewegbare Backen 16, 18 vorgesehen.

Wie auch aus dem Querschnitt gemäß Figur 2 deutlich wird, weist die Backenführung 14 zwei einander gegenüberliegende Seitenwandungen 22 auf, an der Führungsflächen 24 vorgesehen sind. Die Backen 16, 18 weisen zur Bildung einer Gleitführung mit den Führungsflächen 24 zusammenwirkende Gleitflächen 26 auf.

Bei der Ausführungsform gemäß Figur 1 und 2 sind insgesamt acht Führungsflächen 24.1 bis 24.8 vorgesehen, die mit acht Gleitflächen 26.1 bis 26.8 zur Bildung einer Gleitführung zusammenwirken. Die jeweils benachbarten Führungsflächen 24.1 und 24.2; 24.3 und 24.4; 24.5 und 24.6; sowie 24.7 und 24.8 schließen jeweils einen spitzen Winkel α ein. Entsprechend schließen die zugehörigen, backenseitigen Gleitflächen 26.1 bis 26.8 jeweils einen entsprechenden spitzen Winkel α ein, der insbesondere im Bereich von 20° - 40°, und weiter im Bereich von 28° - 32° und vorzugsweise im Bereich von 30° liegt.

Insgesamt sind die Seitenwandungen 22 sowie die mit den Seitenwandungen 22 zusammenwirkenden Abschnitte der Backen 16, 18 symmetrisch zu einer sich in Verfahrrichtung 26 erstreckenden, zwischen den Seitenwandungen liegenden Mittelebene 56 ausgebildet.

In der Backenführung 14 sind Seitenwandungen 22 zwei einander gegenüberliegend angeordnete Laufbahnteile 30 vorgesehen. Zwischen den Laufbahnteilen 30 und der jeweiligen Backe 16, 18 sind Wälzkörper 32, beispielsweise in Form von Tonnen oder Rollen, vorgesehen. Die Anordnung der Wälzkörper 32 kann dabei der Anordnung in einem Kreuzrollenlager entsprechen. Zur Anlage der Wälzkörper 32 sehen die Laufbahnteile 30 Laufbahnen 34 vor. Ebenso sehen die Backen 16, 18 zur Anlage der Wälzköper 32 backenseitige Laufbahnen 36 vor. Die an einem Laufbahnteil 30 vorgesehenen Laufbahnen 34 schließen jeweils einen stumpfen Winkel β ein, der im Bereich von 270° liegt. Neben der durch die Führungsflächen 24 und Gleitflächen 26 gebildeten Gleitführung wird aufgrund des Vorsehens der Wälzkörper 32 eine Wälzführung der Backen 16, 18 bereitgestellt.

Zwischen dem Gehäusekörper 12 und den Laufbahnteilen 30 sind Vorspannmittel 38 zur Erzeugung von Vorspannkräften F vorgesehen, die die Laufbahnteile 30 hin zur Backe 16, 18 drängen, so dass die Wälzkörper 32 unter Vorspannung gegen die backenseitigen Laufbahnen 36 gedrängt werden. Dadurch, dass die Vorspannkräfte F im Ruhezustand gleich groß sind, wird die jeweilige Backe 16,18 weitgehend mittig in der Backenführung 14 gehalten. In der Figur 2 sind die Vorspannmittel 38 als Elastomerfederblöcke ausgebildet; anstelle von diesen Elastomerfederblöcke können auch Schraubenfedern, Spiralfedern oder andere Federelemente Verwendung finden.

Die Gleitführung ist vorzugsweise als spielbehaftete Gleitführung ausgebildet, die zwischen den Führungsflächen 24 und den Gleitflächen 26 ein Spiel aufweist. Das Spiel ist dabei derart, dass die Führungsflächen 24 dann gegen die Gleitflächen 26 wirken, wenn eine quer zur Verfahrrichtung, entgegen der jeweiligen Vorspannkraft F wirkende Kraft, die die jeweilige Vorspannkraft F aufhebt oder überschreitet, auf die jeweilige Backe 16, 18 wirkt.

Eine derartige äußere Kraft kann insbesondere aus einer Überlastung, einem Schlag oder einem Stoß resultieren. Das Spiel der Gleitführung ist dabei so gewählt, dass bei Auftreten von derartigen äußeren Kräften die Gleitführungen zum Tragen kommt, bevor es zu einer Beschädigung der Wälzkörper 32 oder der Laufbahnen 34, 36 kommen kann. Die Wälzführung wird folglich durch zum Einsatz kommen der Gleitführungen vor einer Überlast geschützt.

Aufgrund des Vorsehens der Federmittel und der zur Verfügung gestellten Vorspannkräfte ist die Wälzführung spielfrei ausgebildet. Dadurch ergibt sich ein sehr reibungsarmes und damit leichtes In-Bewegung-Setzen der Backen 16, 18; ein Slip-Stick-Effekt, wie er bei reinen Gleitführungen auftritt, wird reduziert und vorzugsweise vermieden. Wirken größere Lasten oder Kräfte auf die Backe 16, 18, so kann die daraus resultierende Kraft über die Gleitführung in den Gehäusekörper 12 abgeleitet werden, ohne dass es zu Beschädigungen der Wälzführung kommt.

Bei der in der Figur 2 dargestellten Ausführungsform ist das jeweilige Vorspannelement 38, und die daraus resultierende jeweilige Vorspannkraft F relativ klein ausgebildet. Dadurch wird erreicht, dass eine Bewegung der Backen 16, 18, ohne dass eine äußere Kraft auf die Backen 16, 18 wirkt, über die Wälzführung erfolgt. Aufgrund der geringen Vorspannkräfte kommt, sobald äußere Kräfte auf die Backen 16, 18 wirken, die Gleitführung zum Tragen. Vorteilhaft ist, dass beim Anfahren der Backen 16, 18 kein Stick-Slip-Effekt auftritt.

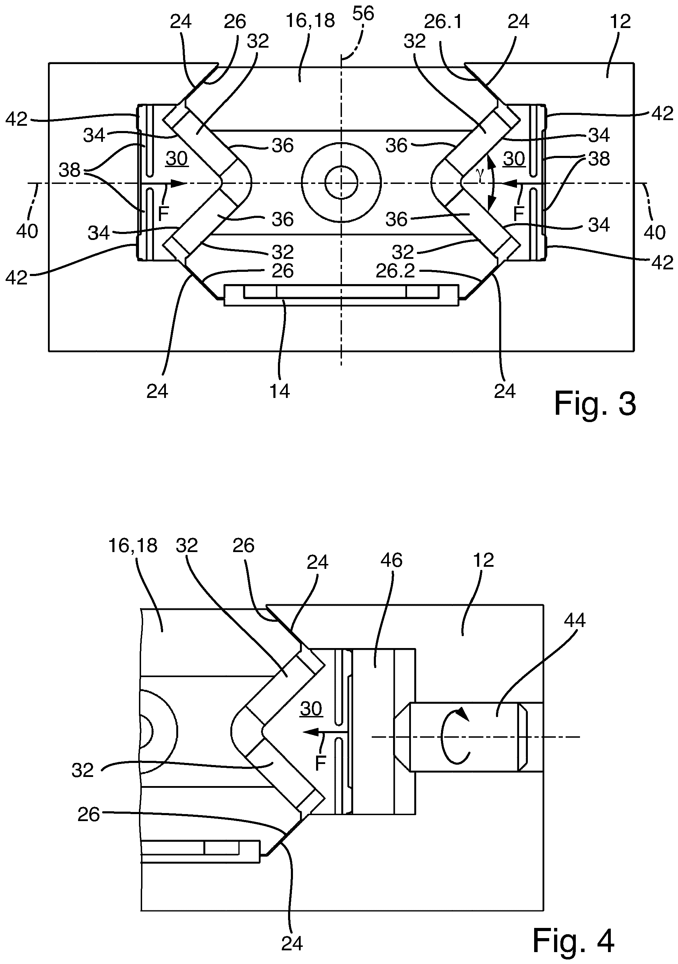

Bei der Ausführungsform gemäß Figur 3 ist, wie auch bei der Ausführungsform gemäß Figur 2, eine Gleitführungen und eine Wälzführung vorgesehen. Der Figur 2 entsprechende Bauteile tragen entsprechende Bezugszeichen.

Anders als bei der Figur 2 schließen bei der Ausführungsform gemäß Figur 3 die Laufbahnen 34 am Laufbahnteil 30 jeweils einen spitzen Winkel γ im Bereich von vorzugsweise 90° ein. Durch vorsehen eines Winkels γ von 90° ergeben sich aufgrund der asymmetrischen Verhältnisse in quer zur Verfahrrichtung verlaufender Richtung ähnliche Verhältnisse. Beträgt der Winkel γ weniger als 90°, ergeben sich bessere Eigenschaften in z-Richtung, also in Figur 2 in nach oben gewandter Richtung. Beträgt der Winkel γ mehr als 90° ergeben sich bessere Eigenschaften in y-Richtung, also in Figur 2 nach rechts oder links gewandter Richtung. Zwischen der jeweiligen Laufbahn 34 und der damit korrespondierenden, backenseitigen Laufbahn 36 sind die Wälzkörper 32 vorgesehen. Mit jedem Laufbahnteil 30 wirken insgesamt zwei Reihen von Wälzkörpern 32 zusammen. Entsprechend der Ausführungsform gemäß Figur 2 ist auch bei der Ausführungsform gemäß Figur 3 vorgesehen, dass die backenseitigen Laufbahnen 36 zwischen backenseitigen Gleitflächen 26 liegend angeordnet sind.

Die Gleitflächen 26 und die Laufbahnen 36 bilden bei der Ausführungsform gemäß Figur 3 in der in Figur 3 gezeigten Schnittebene eine Zick-Zack-Linie, die symmetrisch zu einer Mittellängsebene, die in Figur 3 mit dem Bezugszeichen 40 gekennzeichnet ist, verlaufen. Die Gleitfläche 26.1 schließt dabei mit der sich an sie anschließenden Laufbahn 36 einen 90°-Winkel ein. Die beiden Laufbahnen 36 schließen ihrerseits wiederum einen Winkel von 90° ein und die untere Laufbahn 36 schließt mit der sich an ihr anschießenden Gleitfläche 26.2, wie aus Figur 3 deutlich wird, ebenfalls einen Winkel von 90° ein.

Bei der Ausführungsform gemäß Figur 3 sind die Vorspannmittel 38 als Federzungen ausgebildet, die einstückig mit dem Laufbahnteil 30 ausgebildet sind. Die federzungenartigen Vorspannmittel 38 weisen freie Enden 42 auf, die zur Bereitstellung der Vorspannkräfte F elastisch nachgiebig gegen den Gehäusekörper 12 wirken.

Auch bei der Ausführungsform gemäß Figur 3 handelt es sich bei dem von den Führungsflächen 24 und Gleitflächen 26 realisierte Gleitführung um eine spielbehaftete Gleitführung, die derart ausgelegt ist, dass die Führungsflächen 24 dann gegen die Gleitflächen 26 wirken, wenn eine die jeweilige Vorspannkraft F überschreitende Kraft auf die Backe 16, 18 wirkt.

Bei der Ausführungsform gemäß Figur 3 werden, im Vergleich zur Ausführungsform gemäß Figur 2, deutlich größere Vorspannkräfte F bereitgestellt. Dadurch bildet die Gleitführung einen Überlastschutz. Im Normalbetrieb der Greifvorrichtung 10 kommt die vergleichsweise großdimensionierte Wälzführung zum Tragen. Nur bei Überlast, Schlägen oder Stößen, wenn die auf die Backe wirkenden äußeren Kräfte die jeweilige Vorspannkraft F aufhebt oder übersteigt, werden die daraus resultierenden Kräfte von der Gleitführung abgefangen. Dies hat den Vorteil, dass die stoßempfindliche Wälzführung im kritischen Bereich durch die Gleitführung geschützt wird.

In der Figur 4 ist eine Weiterbildung der Ausführungsform gemäß Figur 3 gezeigt. Bei der Ausführungsform gemäß Figur 4 sind zusätzlich Einstellmittel 44 in Form von Gewindebolzen vorgesehen, die unterschiedlich weit in den Grundkörper 12 eingeschraubt werden. Mit dem jeweiligen Einstellmittel 44 kann die auf das jeweilige Laufbahnteil 30 wirkende Vorspannkraft F, die vom jeweiligen Vorspannelement 38 bereitgestellt wird, eingestellt werden kann. Zur besseren Krafteinleitung ist zwischen dem Einstellmittel 44 und dem Laufbahnteil 30 eine Druckplatte 46 vorgesehen. Die Ausführungsform gemäß Figur 4 hat also den Vorteil, dass die Vorspannkraft F aktiv verändert werden kann, wodurch auch der Umschaltpunkt zwischen der Wälzführung und der Gleitführung verändert und an unterschiedliche Anwendungen angepasst werden kann.

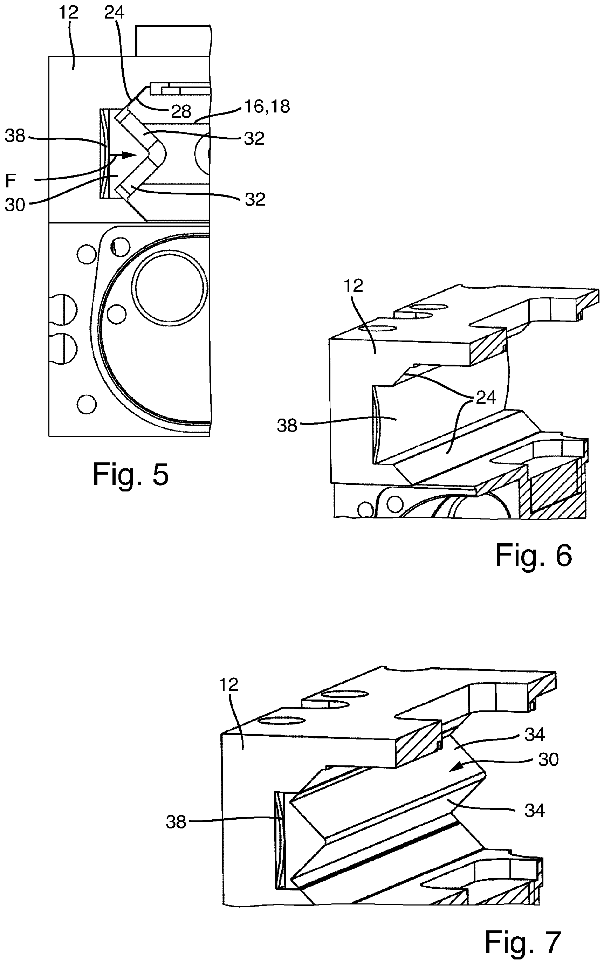

Die in der Figur 5 bis 7 gezeigte Ausführungsform entspricht im Wesentlichen der Ausführungsform gemäß Figur 3, wobei hier ein separat vom Laufbahnteil 30 vorgesehenes Vorspannmittel 38 vorgesehen ist. Wie aus der isometrischen Ansicht gemäß Figur 6 deutlich wird, ist das Vorspannmittel 38 als vorgespannte Blattfeder 38 ausgebildet, welche einerseits gegen den Gehäusekörper 12 und andererseits gegen das jeweilige Laufbahnteil 30 wirkt.

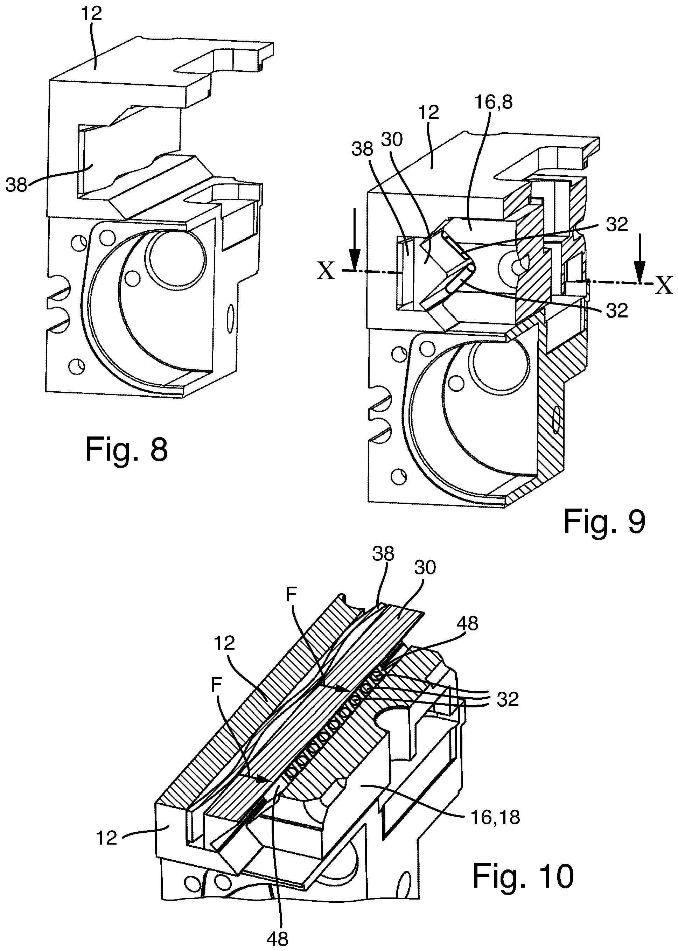

Bei der Ausführungsform gemäß Figur 8 bis 10 ist das Vorspannmittel 38 als Wellenfeder ausgebildet, welche zwischen dem Gehäusekörper 12 und dem jeweiligen Laufbahnteil 30 vorgesehen ist. Im Schnitt gemäß der Figur 10 wird zudem deutlich, dass die einzelnen Wälzkörper 32 in einem Käfig 48 gefangen sind.

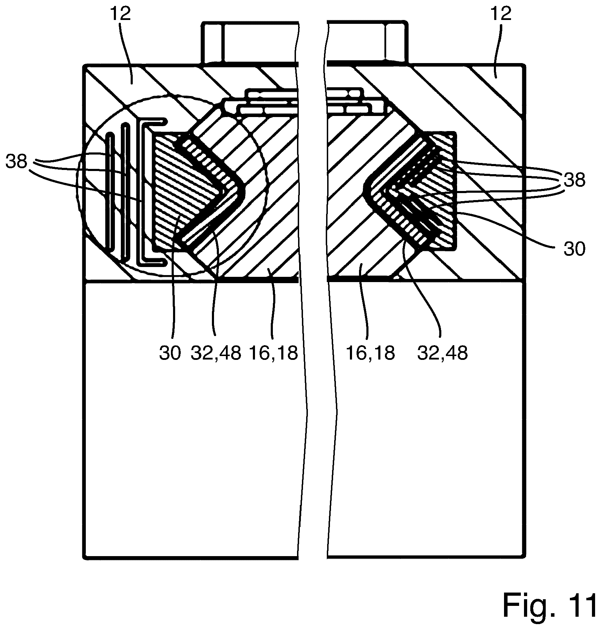

In der Figur 11 sind zwei weitere Ausführungsformen einer erfindungsgemäßen Greifvorrichtung im Querschnitt gezeigt, wobei den in den vorherigen Ausführungsformen entsprechende Bauteile entsprechende Bezugszeichen tragen. Bei der in der linken Hälfte der Figur 11 gezeigten Ausführungsform sind Vorspannmittel 38 als Materialausnehmungen in dem Gehäusekörper 12 realisiert. Bei der in der Figur 11 auf der rechten Seite gezeigten Ausführungsform sind die Vorspannmittel 38 als Materialausnehmungen im Laufbahnteil 30 realisiert. Erfindungsgemäß ist auch eine Kombination der in der Figur 11 gezeigten Ausführungsform denkbar, also Materialausnehmungen im Gehäusekörper 12 und auch im jeweiligen Laufbahnteil 30 vorzusehen.

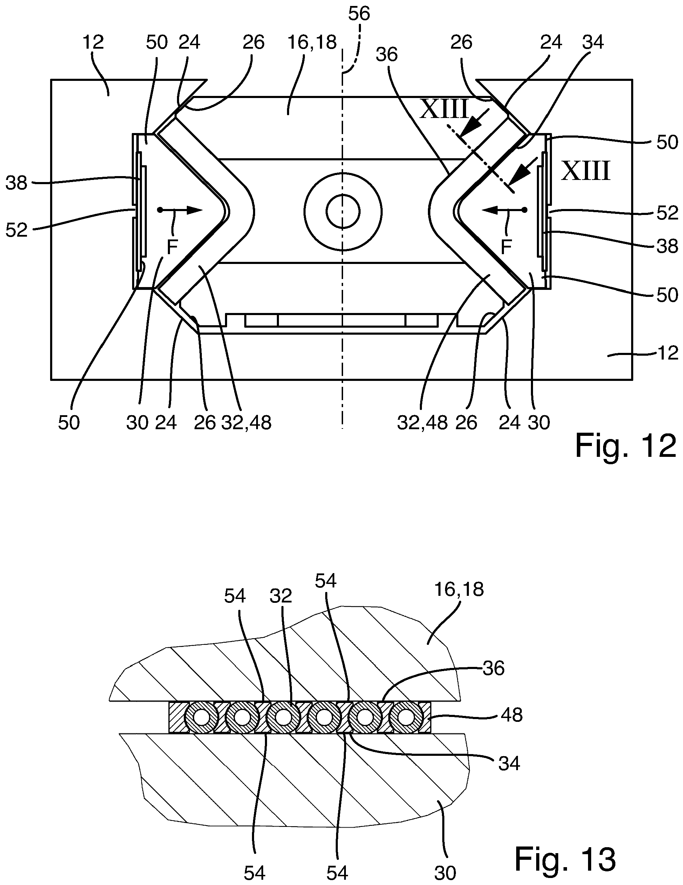

In den Figuren 12 und 13 ist eine weitere Ausführungsform gezeigt, wobei auch hier den anderen Ausführungsformen entsprechende Bauteile mit entsprechenden Bezugszeichen gekennzeichnet sind. Bei dieser Ausführungsform ist auf der dem Gehäusekörper 12 zugewandten Seite der Laufbahnteile 30 ein Vorspannmittel 38 in Form einer Federplatte gezeigt. Im Randbereich wirkt die Federplatte mit Anlagabschnitten 50 des jeweiligen Laufbahnteils 30 zusammen. Im mittleren Bereich wirkt eine gehäusekörperseitige Erhebung 52 gegen das Vorspannmittel. Durch elastische Verformung des Vorspannmittels 38 wird die jeweilige Vorspannkraft F bereitgestellt.

Bei der Ausführungsform gemäß Figur 12 und 13 sind die Wälzkörper 32 in einem Käfig 48 angeordnet. Der Käfig 48 weist parallel zu den Laufbahnen 34, 36 verlaufende Gleitabschnitte 54 auf, die in Figur 13 gezeigt sind. Die Gleitabschnitte 54 können zusammen mit den Laufbahnen 34, 36 bei Überschreiten einer Kraft, aufgrund welcher die Wälzkörper in radialer Richtung elastisch zusammengedrückt werden, als Gleitführung dienen. Die Wälzkörper 32 können bei der in der Figur 13 gezeigten Ausführungsform als Hohlrollen oder Hohlnadeln ausgebildet sein, wodurch sie in radialer Richtung elastisch nachgiebig sind. Die Nachgiebigkeit kann dabei derart gewählt werden, dass das Vorspannmittels 38 in Form der Federplatte, wie es in Figur 12 gezeigt ist, entfallen kann. Die nachgiebig ausgebildeten Hohlrollen oder Hohlnadeln übernehmen dann die Funktion des Vorspannmittels 38.

Bei der in der Figur 12 und 13 gezeigten Ausführungsform können folglich die Führungsflächen 24 und Gleitflächen 26, die unmittelbar miteinander zusammenwirken, entfallen und durch eine Gleitführung, die von dem Käfig 48, bzw. dessen Gleitabschnitten 54 und den Laufbahnen 34, 36 gebildet werden, ersetzt werden. Durch Verwendung des Wälzkörperkäfigs 48 zur Bildung der Gleitführung kann insgesamt eine sehr kompakt bauende Greif- oder Spannvorrichtung 10 bereitgestellt werden.

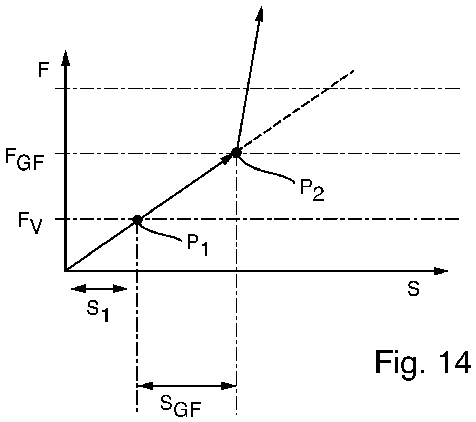

In der Figur 14 ist die auf eine Backe 16, 18 quer zur Verfahrrichtung 26 wirkende Kraft F über den Federweg s des Vorspannmittels 38 aufgezeigt. Im Punkt P₁ wirkt die Vorspannkraft Fᵥ auf die Backe 16, 18. Das Vorspannmittel 38 ist dabei um den Federweg s₁ zusammengedrückt. Steigt vom Punkt P₁ ausgehend die auf die Backe 16, 18 wirkende äußere Kraft F, so wird das Vorspannmittel 38 weiter um das Spiel der Gleitführung s_{GF} komprimiert, bis im Punkt P₂ die Kraft F_{GF} vorliegt, bei welcher die Gleitführung zum Tragen kommt. Steigt im Punkt P₂ die Kraft weiter an, so wird diese weiter ansteigende Kraft ausschließlich von der Gleitführung abgefangen, wodurch die Wälzführung entlastet wird; es tritt dann nur noch eine minimale Verformung aufgrund der Elastizität der verwendeten Materialien auf.

## Patentansprüche

1. Greif- oder Spannvorrichtung (10), mit einem Gehäusekörper (12) und mit wenigstens einer im Gehäusekörper (12) vorgesehenen Backenführung (14), die zwei Seitenwandungen (22) aufweist, mit wenigstens einer in der Backenführung (14) entlang einer Verfahrrichtung (26) verfahrbaren Backe (16, 18), wobei an den Seitenwandungen (22) Führungsflächen (24) vorgesehen sind und wobei die Backe (16, 18) zur Bildung einer Gleitführung mit den Führungsflächen (24) zusammenwirkende Gleitflächen (26) aufweist, **dadurch gekennzeichnet, dass** in der Backenführung (14) wenigstens ein Laufbahnteil (30) und Wälzkörper (32) vorgesehen sind, wobei die Backe (16, 18) und das Laufbahnteil (30) jeweils eine Laufbahn (34, 36) zur Anlage gegen die Wälzkörper (32) zur Bildung einer Wälzführung aufweisen, und dass Vorspannmittel (38) zur Erzeugung einer Vorspannkraft (F) vorgesehen sind, wobei die Vorspannkraft (F) auf das Laufbahnteil (30) wirkt, so dass die Wälzkörper (32) gegen die backenseitigen Laufbahnen (34) gedrängt werden.

2. Greif- oder Spannvorrichtung (10) nach Anspruch 1, **dadurch gekennzeichnet, dass** die Gleitführung zwischen den Führungsflächen (24) und den Gleitflächen (26) ein Spiel aufweist, so dass die Führungsflächen (24) nur dann gegen die Gleitflächen (26) wirken, wenn eine entgegen der Richtung der Vorspannkraft, die Vorspannkraft (F) aufhebende oder überschreitende äußere Kraft auf die Backe (16, 18) wirkt.

3. Greif- oder Spannvorrichtung (10) nach Anspruch 1 oder 2, **dadurch gekennzeichnet, dass** an jeder Seitenwandung (22) ein Laufbahnteil (30) vorgesehen ist, wobei die Laufbahnteile (30) symmetrisch zueinander und/oder zu einer sich in Verfahrrichtung erstreckenden Mittelebene (56) angeordnet sind.

4. Greif- oder Spannvorrichtung (10) nach Anspruch 1, 2, oder 3, **dadurch gekennzeichnet, dass** die Laufbahnteile (30) parallel zueinander verlaufende Laufbahnen (34,36) aufweisen.

5. Greif- oder Spannvorrichtung (10) nach einem der vorhergehenden Ansprüche, **dadurch gekennzeichnet, dass** das jeweilige Laufbahnteil (30) zwei einen Winkel (β, y) einschließende Laufbahnen (34,36) aufweist und dass die jeweilige Backe (16, 18) dazu entsprechend verlaufende Gleitflächen (26) aufweist.

6. Greif- oder Spannvorrichtung (10) nach einem der vorhergehenden Ansprüche, **dadurch gekennzeichnet, dass** an jeder Seitenwandung (22) mehrere Führungsflächen (24) vorgesehen sind, wobei die Ebenen, in denen benachbarte Führungsflächen (24) liegen, einen spitzen Winkel (α) einschließen.

7. Greif- oder Spannvorrichtung (10) nach einem der vorhergehenden Ansprüche, **dadurch gekennzeichnet, dass** die Backe (16, 18) wenigstens zwei mit einer Seitenwandung (22) zusammenwirkende Gleitflächen (26) aufweist und dass wenigstens eine backenseitige Laufbahn (34) zwischen diesen Gleitflächen (26) angeordnet ist.

8. Greif- oder Spannvorrichtung (10) nach einem der vorhergehenden Ansprüche, **dadurch gekennzeichnet, dass** die Vorspannmittel (38) einstückig mit dem Laufbahnteil (30) und/oder dem Gehäusekörper (12) ausgebildet sind.

9. Greif- oder Spannvorrichtung (10) nach einem der Ansprüche 1 bis 7, **dadurch gekennzeichnet, dass** die Vorspannmittel (38) als zwischen dem Gehäusekörper (12) und dem Laufbahnteil (30) vorgesehene Federelemente ausgebildet sind.

10. Greif- oder Spannvorrichtung (10) nach einem der vorhergehenden Ansprüche, **dadurch gekennzeichnet, dass** Einstellmittel (44) zur Einstellung der Vorspannkraft (F) der Vorspannmittel (38) vorgesehen sind.

11. Greif- oder Spannvorrichtung (10) nach einem der vorhergehenden Ansprüche, **dadurch gekennzeichnet, dass** die Wälzkörper (32) in einem Käfig (48) gefangen sind, wobei der Käfig (48) mit den Laufbahnen (34, 36) zusammenwirkende Gleitabschnitte (54) aufweist.

12. Greif- oder Spannvorrichtung (10) nach einem der vorhergehenden Ansprüche, **dadurch gekennzeichnet, dass** die Wälzkörper (32) als Kugeln, Tonnen, Rollen oder Nadeln ausgebildet sind.

## Claims

1. Gripping or clamping device (10) comprising a housing body (12) and at least one jaw guide (14) which is provided in the housing body (12) and has two lateral walls (22), comprising at least one jaw (16, 18) which can be moved in the jaw guide (14) along a movement direction (26), guide surfaces (24) being provided on the lateral walls (22) and the jaw (16, 18) having sliding surfaces (26) which interact with the guide surfaces (24) in order to form a sliding guide, **characterized in that** at least one raceway part (30) and rolling elements (32) are provided in the jaw guide (14), the jaw (16, 18) and the raceway part (30) each having a raceway (34, 36) for contact with the rolling elements (32) in order to form a rolling guide, and **in that** pretensioning means (38) are provided for generating a pretensioning force (F), the pretensioning force (F) acting on the raceway part (30), such that the rolling elements (32) are pushed against the raceways (34) on the jaw side.

2. Gripping or clamping device (10) according to claim 1, **characterized in that** the sliding guide has a clearance between the guide surfaces (24) and the sliding surfaces (26), such that the guide surfaces (24) only act against the sliding surfaces (26) if an external force which is counter to the direction of the pretensioning force and counteracts or exceeds the pretensioning force (F) acts on the jaw (16, 18).

3. Gripping or clamping device (10) according to claim 1 or claim 2, **characterized in that** a raceway part (30) is provided on each lateral wall (22), the raceway parts (30) being arranged symmetrically with respect to one another and/or with respect to a central plane which extends in the movement direction (56).

4. Gripping or clamping device (10) according to claim 1, 2 or 3, **characterized in that** the raceway parts (30) have raceways (34, 36) extending in parallel with one another.

5. Gripping or clamping device (10) according to any of the preceding claims, **characterized in that** the relevant raceway part (30) has two raceways (34, 36) which include an angle (β, γ), and **in that** the relevant jaw (16, 18) has sliding surfaces (26) which extend correspondingly thereto.

6. Gripping or clamping device (10) according to any of the preceding claims, **characterized in that** a plurality of guide surfaces (24) are provided on each lateral wall (22), the planes in which adjacent guide surfaces (24) are located including an acute angle (α).

7. Gripping or clamping device (10) according to any of the preceding claims, **characterized in that** the jaw (16, 18) has at least two sliding surfaces (26) which interact with a lateral wall (22), and **in that** at least one jaw-side raceway (34) is arranged between said sliding surfaces (26).

8. Gripping or clamping device (10) according to any of the preceding claims, **characterized in that** the pretensioning means (38) are integral with the raceway part (30) and/or the housing body (12).

9. Gripping or clamping device (10) according to any of claims 1 to 7, **characterized in that** the pretensioning means (38) are designed as spring elements provided between the housing body (12) and the raceway part (30).

10. Gripping or clamping device (10) according to any of the preceding claims, **characterized in that** adjusting means (44) are provided for adjusting the pretensioning force (F) of the pretensioning means (38).

11. Gripping or clamping device (10) according to any of the preceding claims, **characterized in that** the rolling elements (32) are trapped in a cage (48), the cage (48) having sliding portions (54) which interact with the raceways (34, 36).

12. Gripping or clamping device (10) according to any of the preceding claims, **characterized in that** the rolling elements (32) are designed as balls, barrels, rollers or needles.

## Revendications

1. Dispositif de préhension ou de serrage (10), comportant un corps de boîtier (12) et au moins un guide de mâchoire (14) situé dans le corps de boîtier (12) et comportant deux parois latérales (22), au moins une mâchoire (16, 18) pouvant être déplacée dans le guide de mâchoire (14) le long d'une direction de déplacement (26), dans lequel des surfaces de guidage (24) sont situées sur les parois latérales (22) et dans lequel la mâchoire (16, 18) comporte des surfaces de coulissement (26) coopérant avec les surfaces de guidage (24) pour former un guide de coulissement, **caractérisé en ce qu'**au moins une partie piste (30) et des corps de roulement (32) sont situés dans le guide de mâchoire (14), dans lequel la mâchoire (16, 18) et la partie piste (30) comportent respectivement une piste (34, 36) destinée à l'appui sur les corps de roulement (32) et à la formation d'un guide de roulement, et que des moyens de précontrainte (38) sont fournis pour générer une force de précontrainte (F), dans lequel la force de précontrainte (F) agisse sur la partie piste (30) de telle sorte que les corps de roulement (32) peuvent être poussés contre les pistes (34) côté mâchoire.

2. Dispositif de préhension ou de serrage (10) selon la revendication 1, **caractérisé en ce que** le guide de coulissement présente un jeu entre les surfaces de guidage (24) et les surfaces de coulissement (26) de telle sorte que les surfaces de guidage (24) n'agissent ainsi que contre les surfaces de coulissement (26) lorsqu'une force externe, s'opposant à la direction de la force de précontrainte et annulant ou dépassant la force de précontrainte (F), agit sur la mâchoire (16, 18).

3. Dispositif de préhension ou de serrage (10) selon la revendication 1 ou 2, **caractérisé en ce qu'**une partie piste (30) est située sur chaque paroi latérale (22), dans lequel les parties pistes (30) sont symétriques entre elles et/ou sont disposées par rapport à un plan médian (56) s'étendant dans la direction de déplacement.

4. Dispositif de préhension ou de serrage (10) selon la revendication 1, 2 ou 3, **caractérisé en ce que** les parties pistes (30) comportent des pistes (34, 36) s'étendant parallèles les unes aux autres.

5. Dispositif de préhension ou de serrage (10) selon l'une quelconque des revendications précédentes, **caractérisé en ce que** la partie piste (30) respective comporte deux pistes (34, 36) délimitant un angle (β, γ) et que la mâchoire (16, 18) respective comporte des surfaces de coulissement (26) s'étendant de manière correspondante.

6. Dispositif de préhension ou de serrage (10) selon l'une quelconque des revendications précédentes, **caractérisé en ce que** plusieurs surfaces de guidage (24) sont situées sur chaque paroi latérale (22), dans lequel les plans dans lesquels se trouvent les surfaces de guidage (24) adjacentes délimitent un angle aigu (α).

7. Dispositif de préhension ou de serrage (10) selon l'une quelconque des revendications précédentes, **caractérisé en ce que** la mâchoire (16, 18) comporte au moins deux surfaces de coulissement (26) coopérant avec une paroi latérale (22) et qu'au moins une piste (34) côté mâchoire est disposée entre lesdites surfaces de coulissement (26).

8. Dispositif de préhension ou de serrage (10) selon l'une quelconque des revendications précédentes, **caractérisé en ce que** des moyens de précontrainte (38) sont conçus monobloc avec la partie piste (30) et/ou le corps de boîtier (12).

9. Dispositif de préhension ou de serrage (10) selon l'une quelconque des revendications 1 à 7, **caractérisé en ce que** les moyens de précontrainte (38) sont conçus sous la forme d'éléments de ressort situés entre le corps de boîtier (12) et la partie piste (30).

10. Dispositif de préhension ou de serrage (10) selon l'une quelconque des revendications précédentes, **caractérisé en ce que** des moyens de réglage (44) permettant de régler la force de précontrainte (F) des moyens de précontrainte (38) sont fournis.

11. Dispositif de préhension ou de serrage (10) selon l'une quelconque des revendications précédentes, **caractérisé en ce que** les corps de roulement (32) sont pris dans une cage (48), dans lequel la cage (48) comporte des sections de coulissement (54) coopérant avec les pistes (34, 36).

12. Dispositif de préhension ou de serrage (10) selon l'une quelconque des revendications précédentes, **caractérisé en ce que** les corps de roulement (32) sont conçus sous la forme de billes, de tonneaux, de rouleaux ou d'aiguilles.
